# EUROPEAN PATENT SPECIFICATION

(11) **EP 3 248 823 B1**
(45) Date of publication and mention of the grant of the patent: **01.08.2018**
(21) Application number: 16170976.1
(22) Date of filing: 24.05.2016
(51) Int. Cl.: B60K 17/02, F16D 13/72

(54) **MOTOR-VEHICLE POWERTRAIN UNIT WITH A SYSTEM FOR COOLING A CLUTCH DEVICE**
KRAFTFAHRZEUGANTRIEBSSTRANGEINHEIT MIT EINEM SYSTEM ZUR KÜHLUNG EINER KUPPLUNGSVORRICHTUNG
UNITÉ DE GROUPE MOTOPROPULSEUR DE VÉHICULE AUTOMOBILE AVEC UN SYSTÈME DE REFROIDISSEMENT D'UN DISPOSITIF D'EMBRAYAGE

(43) Date of publication of application: 29.11.2017
(73) Proprietor: C.R.F. Società Consortile per Azioni, 10043 Orbassano (Torino) (IT)
(72) Inventor: VAFIDIS, Constantinos, I-10043 Orbassano (Torino) (IT); ELIA, Corrado, I-10043 Orbassano (Torino) (IT)
(74) Representative: Notaro, Giancarlo

(56) References cited:
- DE-A1-102007 013 034
- DE-A1-102007 041 853
- GB-A- 2 097 873
- US-A1- 2012 191 306
- US-A1- 2013 240 319

## Description

### Field of the invention

The present invention relates to motor-vehicle powertrain units, and in particular regards a powertrain unit comprising:
- a supercharged internal-combustion engine;
- at least one compressor for supercharging the engine;
- a transmission, which can be actuated by said supercharged internal-combustion engine by means of a clutch device of the dry type; and
- an air-cooling system provided for cooling said clutch device with a flow of air, comprising a source of pressurized air, which is located on board of said motor-vehicle and is adapted for supplying said flow within a housing of said clutch device.

### Prior art

During the service life of a motor-vehicle, as a consequence of particular critical manoeuvres, such as repeated slope-starts, there may arise the problem of excessive overheating of the clutch that may cause even permanent damage to the clutch itself.

In this respect, in the art are already known various technical solutions for cooling, by means of a flow of air, a clutch device of the dry type.

A first technical solution envisaged for preventing excessive overheating of the clutch unit is to increase the mass of the clutch unit itself in such a way that, given the same amount of energy dissipated in the form of heat, there is a corresponding lower rise in temperature as compared to a clutch unit with a smaller mass.

A second technical solution to overcome the above problem is to force air into the gearbox housing of the motor-vehicle, and hence towards the clutch unit, using an external blower. The disadvantage of this solution lies in the fact of introducing an air-cooling circuit specifically provided for cooling the clutch, hence causing a considerable increase in costs and encumbrance in the powertrain unit of the motor-vehicle.

An alternative solution to the two solutions mentioned above is to cool the clutch unit exploiting a source of pressurized air already provided on board the motor-vehicle for other purposes. Technical solutions of the latter type are, for example, described in the documents DE 10 2007 041853 which shows the features of the preamble of claim 1 and DE 10 2007 01304.

However, the solutions described in the above documents present some disadvantages, such as the operating complexity and the need to make extensive modifications to the layout of the motor-vehicle powertrain unit on which the function of cooling of the clutch is to be integrated.

### Object of the invention

With a view to overcoming the drawbacks of the prior art, the main object of the present invention is to provide a motor-vehicle powertrain unit with a system for cooling the clutch device, which performs in an effective and reliable way all the functions for which it is configured and at the same time is inexpensive and simple to implement.

A further object of the present invention is to provide a powertrain unit of the type referred to above in which it is not necessary to alter markedly the layout of the powertrain unit in order to introduce the clutch-cooling system.

### Summary of the invention

With a view to achieve the aforesaid purposes, the subject of the present invention is a motor-vehicle powertrain unit having all the characteristics indicated at the beginning of the present description and moreover characterized in that the source of pressurized air is the aforesaid at least one supercharging compressor.

The supercharging compressor may be the compressor of a turbosupercharger unit and/or a compressor actuated by an electric motor (for example, of the so-called e-booster type) or actuated mechanically (for example, of the supercharger type)

According to an important characteristic of the invention, the cooling system further comprises:
- at least one inlet duct for the flow of air supplied by said source of pressurized air within the housing of said clutch device;
- at least one valve located along said at least one inlet duct and adapted for regulating the flow of air at inlet into the housing of said clutch device; and
- means for controlling said valve as a function of a value of temperature of said clutch device.

Thanks to the aforesaid characteristics, the powertrain unit according to the present invention enables cooling of the clutch by means of a flow of air generated by a source of pressurized air already provided on board the motor-vehicle for supercharging the internal-combustion engine, without markedly altering the layout of the powertrain unit.

According to a further important characteristic of the invention, the valve is an electrically operated valve, and an electronic control unit is moreover provided for controlling the valve at least as a function of the value of temperature of the clutch device. The electronic control unit keeps the valve in the open position, enabling passage of the flow of cooling air towards the clutch, when the value of temperature of the clutch is above a predetermined threshold value.

According to a first embodiment of the invention, the electronic control unit is provided for calculating the value of temperature of the clutch device on the basis of a mathematical model as a function of one or more parameters, such as the torque of the crankshaft and the difference of speed of rotation between input and output of the clutch device.

In an alternative embodiment, the electronic control is provided for receiving a signal from a sensor indicating the value of temperature of the clutch device.

According to a further preferred characteristic of the invention, the electronic control unit is provided for enabling opening of the valve only when the accelerator pedal of the motor-vehicle is in a released condition. It is thus guaranteed that operation of the engine is not penalized during cooling of the clutch. It may also be envisaged in this case that the electronic unit be programmed for generating an alarm signal when it detects the need for cooling the clutch device, but at the same time it verifies that cooling is inhibited for a duration that exceeds a pre-set time or for a distance covered by the motor-vehicle that exceeds a predetermined value.

### Detailed description of a preferred embodiment of the invention

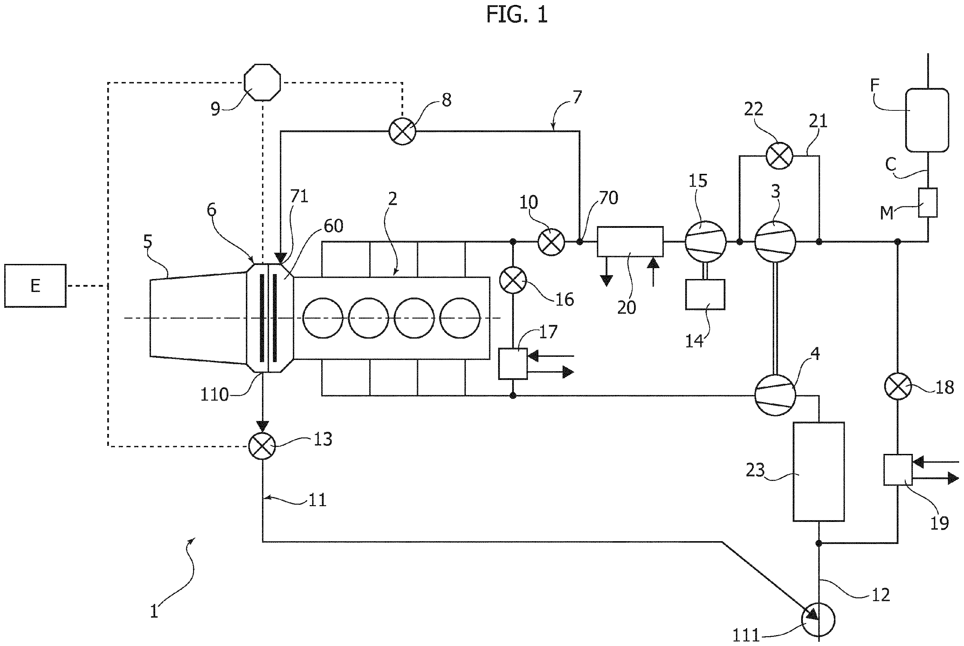

Further characteristics and advantages of the invention will emerge from the ensuing description with reference to the annexed drawings, which are provided purely by way of non-limiting example, where Figure 1 is a diagram of a preferred embodiment of a powertrain unit according to the present invention.

In figure 1, designated as a whole by the reference 1 is a preferred embodiment of a motor-vehicle powertrain unit according to the present invention.

According to a technique in itself known, the motor-vehicle powertrain unit 1 comprises a supercharged internal-combustion engine 2, equipped with a turbosupercharger unit including a compressor 3 for the air for supplying the engine 2 and a turbine 4 for actuation of the compressor 3, the turbine 4 being in turn configured to be actuated by an exhaust-gas flow of the engine 2.

With the reference C is indicated an intake duct, wherein an air filter F and a flowmeter M are interposed. The duct C directs the intake air towards the compressor 3. In the embodiment illustrated in Figure 1, moreover associated to the compressor 3 is a bypass duct 21, wherein a bypass valve 22 is associated.

The powertrain unit 1 further comprises a transmission 5, which can be actuated by the supercharged internal-combustion engine 2 by means of a clutch device 6 of the dry type. The transmission 5 may be either of the manual type or of the automated single-clutch or dual-clutch type. In the present description and in the annexed claims, by the expression "clutch device" is understood a clutch device that comprises a single clutch or even more than one clutch.

Moreover illustrated in figure 1 is an exhaust-gas-recirculation (EGR) system comprising: a high-pressure EGR valve 16; a high-pressure heat-exchanger 17; a low-pressure EGR valve 18; and a low-pressure heat-exchanger 19. In the present description and in the annexed drawings, the constructional details regarding the EGR system are not presented any further since these details may be provided in any known way.

According to an important characteristic of the invention, the powertrain unit 1 further comprises a cooling system provided for cooling the clutch device 6 by means of a flow of air so as to prevent overheating or accelerate cooling of the clutch device 6 following upon critical manoeuvres of the motor-vehicle.

In order to generate the flow of cooling air, the cooling system envisages the use of a source of pressurized air, which is already provided on board the motor-vehicle for supercharging the internal-combustion engine and is configured for supplying the flow of pressurized air within the housing 60 of the clutch device 6.

According to the present invention, the source of pressurized air used for supplying the flow of cooling air is the aforesaid supercharging compressor 3 of the powertrain unit 1.

In order to convey part of the flow of pressurized air generated by the compressor 3 towards the clutch device 6, the cooling system comprises an inlet duct 7. According to the preferred embodiment of the invention, the inlet duct 7 comprises an upstream end 70 in communication with the intake duct C in a position of the duct C downstream of a heat-exchanger 20 designed to cool the fluid prior to its entry into the combustion chamber. The inlet duct 7 further comprises a downstream end 71 that flows into the chamber defined by the housing 60 of the clutch device 6. As an alternative or in addition to the use as source of pressurized air of a conventional compressor forming part of a turbosupercharger unit, it is possible to envisage the use of a secondary compressor 15 actuated by an electric motor 14 (for example, of the so-called e-booster type) or actuated mechanically (for example, of the supercharger type).

According to an important characteristic of the invention, a valve 8 is inserted along the inlet duct 7 and is adapted for regulating the flow of cooling air at inlet into the housing 60 of the clutch device 6.

According to a further characteristic of the invention, the cooling system of the clutch device 6 further comprises an outlet duct 11 for the flow of cooling air to get cooling air to flow out of the housing 60 of the clutch device 6. The outlet duct 11 hence comprises a first end 110 in communication with the chamber defined by the housing 60 of the clutch 6 and an opposite terminal end 111 connected to the exhaust line 12 of the motor-vehicle in a position of the exhaust line 12 downstream of a system 23 for control of noxious emissions.

Indicated by the reference 13 is an outlet valve inserted along the outlet duct 11, configured for regulating the outlet flow of cooling air from the housing 60 of the clutch device 6 and for intercepting communication thereof with the exhaust pipe when the flow is not necessary.

The cooling system included in the powertrain unit 1 according to the present invention further comprises means for controlling the valve 8 and the outlet valve 13 as a function of a value of temperature of the clutch device 6. These means are represented by an electronic control unit E configured for controlling the valves 8 and 13 at least as a function of the value of temperature of the clutch device 6.

In a first embodiment of the invention, the valves 8 and 13 are electrically operated valves of the on/off type. The electronic control unit E keeps the valve 8 in an open position, enabling passage of the flow of cooling air towards the clutch device 6 when the value of temperature of the clutch device 6 is above a predetermined threshold value.

In an alternative embodiment of the invention, the valves 8 and 13 are electrically operated valves of the proportional type and, consequently, the electronic control unit E is provided for beginning to open the valve 8 when a first predetermined threshold value of the temperature of the clutch device is exceeded. As the temperature increases, the valve 8 opens progressively until it is completely open for temperatures equal to or higher than a second predetermined threshold value higher than the first threshold value.

The control for opening and closing of both the inlet valve 8 and the outlet valve 13 allows the possibility of regulating the flow through the housing of the clutch device 6 in an optimal way.

The need for cooling the clutch device 6 is on the other hand to be tempered with that of not adversely affecting the performance of the engine. When a part of the flow of air is conveyed into the inlet duct 7, the powertrain unit 1 could suffer from the fact that a corresponding part of the flow of air does not reach the combustion chambers of the engine cylinders.

To prevent this drawback, in the case of use of a turbosupercharger, it is possible to control the conventional waste-gate valve so as to keep it more closed or to actuate an alternative control device in the case of a VGT (Variable-Geometry Turbine) or VNT (Variable-Nozzle Turbine) in order to increase the speed of the turbine and the consequent action of the compressor. In the case where the secondary compressor 15 is present, it can be resorted to for supplying the higher airflow requirement.

In the case where the amount of air necessary for combustion of the engine is controlled by the flowmeter M, the control unit E is provided for calculating the amount of air diverted into the housing 6 and for requiring of the supercharger system the additional flow rate for supply the engine properly.

In the case where the amount of air necessary for combustion of the engine is controlled by the pressure at the intake manifold (for example, with a speed-density system) diversion of part of the flow into the housing 6 will be compensated for automatically by the engine control, which will manage the supercharger system accordingly.

Preferably, however, the electronic control unit E is pre-arranged for enabling opening of the valves 8 and 13 only when the accelerator pedal of the motor vehicle (which controls a conventional throttle valve 10 or the amount of fuel introduced) is in a released condition. In this case, the engine does not need to deliver torque but can generate, via the compressor 3 or the auxiliary compressor 15, the flow of cooling air necessary for cooling the clutch device 6, for example before or after a hill-start or after any other manoeuvre that is critical for the clutch of the motor vehicle.

As mentioned above, it is also possible to envisage in this case that the electronic unit E be programmed for generating an alarm signal (for example, for lighting up a warning light on the dashboard) when it detects the need to cool the clutch device but at the same time detects that cooling is inhibited for a duration that exceeds a pre-set time or for a distance covered by the motor vehicle that exceeds a pre-set value.

According to a first embodiment of the invention, the electronic control unit E is provided for calculating the value of temperature of the clutch device 6, and then possibly opening the valves 8 and 13 on the basis of one or more parameters calculated using a mathematical model. Such parameters are, in particular, the torque of the crankshaft and the difference of speed of rotation between the input and output of the clutch device 6.

In an alternative embodiment, the electronic control unit E is designed to receive a signal from a sensor (designated as a whole by the reference 9 in Figure 1), which is provided on the housing 60 of the clutch device 6 so as to detect the temperature of the air in the housing 60 and hence estimate in a more reliable way the value of temperature of the clutch device 6.

As emerges clearly from the foregoing description, the powertrain unit according to the present invention is configured for performing in an effective and reliable way the function of cooling of the clutch device, using simple and low-cost means already present for normal management of the powertrain, which thus do not involve any major modifications to the layout of the powertrain unit, and without introducing factors that might penalize efficient operation of the engine.

Of course, while the principle of the invention remains the same, the structural details and the embodiments may vary widely with respect to what has been described and illustrated herein merely to way of example, without thereby departing from the scope of the present invention as specified in the ensuing claims.

## Claims

1. A powertrain unit (1) for motor-vehicle comprising:
- a supercharged internal-combustion engine (2), equipped with at least one compressor (3) for supercharging the engine (2);
- a transmission (5), which can be actuated by said supercharged internal-combustion engine (2) by means of a clutch device (6) of the dry type; and
- an air-cooling system provided for cooling said clutch device (6) with a flow of air, comprising a source of pressurized air located on board of said motor-vehicle and adapted for supplying said flow within a housing (60) of said clutch device (6),
said powertrain unit (1) being **characterized in that** said source of pressurized air is the aforesaid at least one supercharging compressor (3).

2. Powertrain unit (1) according to claim 1, **characterized in that** said cooling system further comprises:
- at least one inlet duct (7) for the flow of air supplied by said source of pressurized air (3) within the housing (60) of said clutch device (6);
- at least one valve (8) located along said at least one inlet duct (7) and adapted for regulating the inlet flow of air into the housing (60) of said clutch device (6); and
- means (9, E) for controlling said valve (8) as a function of a value of temperature of said clutch device (6).

3. Powertrain unit (1) according to claim 2, **characterized in that** said valve (8) is an electrically operated valve and **in that** an electronic control unit (E) is provided for controlling said valve (8) at least as a function of said value of temperature of said clutch device (6).

4. Powertrain unit according to claim 3, **characterized in that** said electronic control unit (E) keeps the valve (8) in an open position, enabling passage of the flow of cooling air towards the clutch device (6), when said value of temperature of said clutch device (6) is above a predetermined threshold value.

5. Powertrain unit according to claim 3, **characterized in that** said electronic control unit (E) is provided for calculating said value of temperature of said clutch device (6) on the basis of a mathematical model as a function of one or more parameters, in particular the torque of the crankshaft of the internal-combustion engine (2), and the difference of speed of rotation between the input and the output of the clutch device (6).

6. Powertrain unit (1) according to claim 3, **characterized in that** said electronic control unit (E) is pre-arranged for receiving a signal from a sensor (9) indicating the value of temperature of the clutch device (6).

7. Powertrain unit (1) according to claim 3, **characterized in that** said electronic control unit (E) is provided for enabling the opening of said valve (8) only when the accelerator pedal (10) of said motor-vehicle is in a released condition.

8. Powertrain unit according to claim 7, **characterized in that** said electronic control unit (E) is programmed for generating an alarm signal when it detects a need for cooling the clutch device (6), but at the same time verifies that cooling is inhibited for a duration that exceeds a predetermined time or for a distance covered by the motor-vehicle that exceeds a predetermined value.

9. Powertrain unit (1) according to claim 1, **characterized in that** said cooling system further comprises an outlet duct (11) for the flow of cooling air from the housing (60) of the clutch device (6), said outlet duct (11) being connected to the exhaust line (12) of said motor-vehicle.

10. Powertrain unit (1) according to claim 8, **characterized in that** an outlet valve (13) is inserted along said outlet duct (12) for regulating the outlet of the flow of air from the housing (60) of said clutch device (6) towards the exhaust line and for intercepting said connection when the flow is not necessary.

11. Powertrain unit (1) according to claim 1, **characterized in that** said supercharging compressor (3) forms part of a turbosupercharger unit including said compressor (3) and a turbine (4) for actuation of the compressor (3), said turbine (4) being in turn adapted to be actuated by an exhaust-gas flow of the engine (2) .

12. Powertrain unit (1) according to claim 1, **characterized in that** said supercharging compressor (3) is actuated by an electric motor (14) or mechanically by the engine itself.

## Patentansprüche

1. Antriebsstrangeinheit (1) für ein Motorfahrzeug, mit:
- einem super-aufgeladenen Verbrennungsmotor (2) mit mindestens einem Kompressor (3) zur Super-Aufladung des Motors (2);
- einem Getriebe (5), das von dem super-aufgeladenen Verbrennungsmotor (2) mittels einer Trockenkupplungsvorrichtung (6) antreibbar ist; und
- einem Luftkühlungssystem, das zum Kühlen der Kupplungsvorrichtung (6) mit einem Luftstrom vorgesehen ist, die eine Druckluftquelle aufweist, die bordintern in dem Motorfahrzeug vorgesehen und ausgebildet ist, den Strom in einem Gehäuse (60) der Kupplungsvorrichtung (6) bereitzustellen,
wobei die Antriebsstrangeinheit (1) **dadurch gekennzeichnet ist, dass** die Druckluftquelle der mindestens eine Kompressor zur Super-Aufladung (3) ist.

2. Antriebsstrangeinheit (1) nach Anspruch 1, **dadurch gekennzeichnet, dass** das Kühlsystem ferner umfasst:
- mindestens eine Einlassleitung (7) für den Luftstrom, der von der Druckluftquelle (3) in dem Gehäuse (60) der Kupplungsvorrichtung (6) bereitgestellt wird;
- mindestens ein Ventil (8), das an der mindestens einen Einlassleitung (7) angeordnet und ausgebildet ist, den Einlassluftstrom in das Gehäuse (60) der Kupplungsvorrichtung (6) zu regeln; und
- eine Einrichtung (9, E) zur Steuerung des Ventils (8) in Abhängigkeit eines Temperaturwerts der Kupplungsvorrichtung (6).

3. Antriebsstrangeinheit (1) nach Anspruch 2, **dadurch gekennzeichnet, dass** das Ventil (8) ein elektrisch betriebenes Ventil ist und eine elektronische Steuereinheit (E) zum Steuern des Ventils (8) zumindest in Abhängigkeit des Temperaturwerts der Kupplungsvorrichtung (6) vorgesehen ist.

4. Antriebsstrangeinheit nach Anspruch 3, **dadurch gekennzeichnet, dass** die elektronische Steuereinheit (E) das Ventil (8) in einer offenen Stellung hält, so dass der Durchgang des Stroms aus kühler Luft zu der Kupplungsvorrichtung (6) ermöglicht ist, wenn der Temperaturwert der Kupplungsvorrichtung (6) über einem vorbestimmten Schwellenwert liegt.

5. Antriebsstrangeinheit nach Anspruch 3, **dadurch gekennzeichnet, dass** die elektronische Steuereinheit (E) zur Berechnung des Temperaturwerts der Kupplungsvorrichtung (6) auf der Grundlage eines mathematischen Modells als eine Funktion eines oder mehrerer Parameter, insbesondere des Drehmoments der Kurbelwelle des Verbrennungsmotors (2), und der Differenz der Drehgeschwindigkeit zwischen dem Eingang und dem Ausgang der Kupplungsvorrichtung (6) vorgesehen ist.

6. Antriebsstrangeinheit (1) nach Anspruch 3, **dadurch gekennzeichnet, dass** die elektronische Steuereinheit (E) zum Empfang eines Signals aus einem Sensor (9), der den Temperaturwert der Kupplungsvorrichtung (6) angibt, vorbereitet ist.

7. Antriebsstrangeinheit (1) nach Anspruch 3, **dadurch gekennzeichnet, dass** die elektronische Steuereinheit (E) so vorgesehen ist, dass sie ermöglicht, das Ventil (8) nur zu öffnen, wenn das Beschleunigerpedal (10) des Motorfahrzeugs in einem freigegebenen Zustand ist.

8. Antriebsstrangeinheit nach Anspruch 7, **dadurch gekennzeichnet, dass** die elektronische Steuereinheit (E) dazu programmiert ist, dass sie ein Alarmsignal erzeugt, wenn sie eine Notwendigkeit zum Kühlen der Kupplungsvorrichtung (6) detektiert, aber gleichzeitig verifiziert, dass ein Kühlen für eine Zeitdauer, die eine vorbestimmte Zeit übersteigt, oder für eine Strecke verhindert wird, die von dem Motorfahrzeug zurückgelegt wird und einen vorbestimmten Wert übersteigt.

9. Antriebsstrangeinheit (1) nach Anspruch 1, **dadurch gekennzeichnet, dass** das Kühlsystem ferner eine Auslassleitung (11) für den Strom aus kühler Luft aus dem Gehäuse (60) der Kupplungsvorrichtung (6) aufweist, wobei die Auslassleitung (11) mit der Abgasleitung (12) des Motorfahrzeugs verbunden ist.

10. Antriebsstrangeinheit (1) nach Anspruch 8, **dadurch gekennzeichnet, dass** ein Auslassventil (13) entlang der Auslassleitung (12) zur Regelung des Auslasses des Luftstroms aus dem Gehäuse (60) der Kupplungsvorrichtung (6) in Richtung zu der Abgasleitung und zur Unterbrechung der Verbindung, wenn der Luftstrom nicht erforderlich ist, eingefügt ist.

11. Antriebsstrangeinheit (1) nach Anspruch 1, **dadurch gekennzeichnet, dass** der Kompressor zur Super-Aufladung (3) einen Teil einer Turbo-Super-Ladereinheit bildet, die den Kompressor (3) und eine Turbine (4) zum Betreiben des Kompressors (3) enthält, wobei die Turbine (4) wiederum ausgebildet ist, von einem Abgasstrom des Motors (2) angetrieben zu werden.

12. Antriebsstrangeinheit (1) nach Anspruch 1, **dadurch gekennzeichnet, dass** der Kompressor zur Super-Aufladung (3) von einem Elektromotor (14) oder mechanisch durch den Motor selbst angetrieben ist.

## Revendications

1. Unité de groupe motopropulseur (1) pour un véhicule automobile comprenant :
- un moteur à combustion interne suralimenté (2), équipé d'au moins un compresseur (3) pour suralimenter le moteur (2) ;
- une transmission (5), qui peut être actionnée par ledit moteur à combustion interne suralimenté (2) au moyen d'un dispositif d'embrayage (6) de type sec ; et
- un système de refroidissement par air prévu pour refroidir ledit dispositif d'embrayage (6) avec un flux d'air, comprenant une source d'air sous pression située à bord dudit véhicule automobile et adaptée pour fournir ledit flux à l'intérieur d'un boîtier (60) dudit dispositif d'embrayage (6),
ladite unité de groupe motopropulseur (1) étant **caractérisée en ce que** ladite source d'air sous pression est l'au moins un compresseur de suralimentation (3) susmentionné.

2. Unité de groupe motopropulseur (1) selon la revendication 1, **caractérisée en ce que** ledit système de refroidissement comprend en outre :
- au moins un conduit d'entrée (7) pour le flux d'air fourni par ladite source d'air sous pression (3) à l'intérieur du boîtier (60) dudit dispositif d'embrayage (6) ;
- au moins une soupape (8) située le long dudit au moins un conduit d'entrée (7) et adaptée pour réguler le flux d'air d'entrée dans le boîtier (60) dudit dispositif d'embrayage (6) ; et
- des moyens (9, E) pour commander ladite soupape (8) en fonction d'une valeur de température dudit dispositif d'embrayage (6).

3. Unité de groupe motopropulseur (1) selon la revendication 2, **caractérisée en ce que** ladite soupape (8) est une soupape actionnée électriquement et **en ce qu'**une unité de commande électronique (E) est prévue pour commander ladite soupape (8) au moins en fonction de ladite valeur de température dudit dispositif d'embrayage (6).

4. Unité de groupe motopropulseur selon la revendication 3, **caractérisée en ce que** ladite unité de commande électronique (E) maintient la soupape (8) dans une position ouverte, permettant un passage du flux d'air de refroidissement vers le dispositif d'embrayage (6), lorsque ladite valeur de température dudit dispositif d'embrayage (6) est supérieure à une valeur seuil prédéterminée.

5. Unité de groupe motopropulseur selon la revendication 3, **caractérisée en ce que** ladite unité de commande électronique (E) est prévue pour calculer ladite valeur de température dudit dispositif d'embrayage (6) sur la base d'un modèle mathématique en fonction d'un ou de plusieurs paramètre(s), en particulier le couple du vilebrequin du moteur à combustion interne (2), et la différence de vitesse de rotation entre l'entrée et la sortie du dispositif d'embrayage (6).

6. Unité de groupe motopropulseur (1) selon la revendication 3, **caractérisée en ce que** ladite unité de commande électronique (E) est pré-agencée pour recevoir un signal à partir d'un capteur (9) indiquant la valeur de température du dispositif d'embrayage (6).

7. Unité de groupe motopropulseur (1) selon la revendication 3, **caractérisée en ce que** ladite unité de commande électronique (E) est prévue pour permettre l'ouverture de ladite soupape (8) seulement lorsque la pédale d'accélérateur (10) dudit véhicule automobile est dans un état relâché.

8. Unité de groupe motopropulseur selon la revendication 7, **caractérisée en ce que** ladite unité de commande électronique (E) est programmée pour générer un signal d'alarme lorsqu'elle détecte un besoin de refroidir le dispositif d'embrayage (6), mais en même temps vérifier que le refroidissement est inhibé pendant une durée qui dépasse un temps prédéterminé ou sur une distance couverte par le véhicule automobile qui dépasse une valeur prédéterminée.

9. Unité de groupe motopropulseur (1) selon la revendication 1, **caractérisée en ce que** ledit système de refroidissement comprend en outre un conduit de sortie (11) pour le flux d'air de refroidissement provenant du boîtier (60) du dispositif d'embrayage (6), ledit conduit de sortie (11) étant relié à la conduite d'échappement (12) dudit véhicule automobile.

10. Unité de groupe motopropulseur (1) selon la revendication 8, **caractérisée en ce qu'**une soupape de sortie (13) est insérée le long dudit conduit de sortie (12) pour réguler la sortie du flux d'air provenant du boîtier (60) dudit dispositif d'embrayage (6) vers la conduite d'échappement et pour intercepter ladite liaison lorsque le flux n'est pas nécessaire.

11. Unité de groupe motopropulseur (1) selon la revendication 1, **caractérisée en ce que** ledit compresseur de suralimentation (3) fait partie d'une unité de turbocompresseur comportant ledit compresseur (3) et une turbine (4) pour l'actionnement du compresseur (3), ladite turbine (4) étant à son tour adaptée pour être actionnée par un flux de gaz d'échappement du moteur (2).

12. Unité de groupe motopropulseur (1) selon la revendication 1, **caractérisée en ce que** ledit compresseur de suralimentation (3) est actionné par un moteur électrique (14) ou mécaniquement par le moteur lui-même.
